# EUROPÄISCHE PATENTANMELDUNG

(11) **EP 1 199 130 A2**
(43) Veröffentlichungstag der Anmeldung: **24.04.2002**
(21) Anmeldenummer: 01122919.2
(22) Anmeldetag: 25.09.2001
(51) Int. Cl.: B23K 37/02, B23K 7/10, B23K 9/28, B23K 26/10

(54) **Brennschneidvorrichtung**

(30) Priorität: 07.10.2000 DE 20017285 U
(71) Anmelder: Hubert, Anton H., 41065 Mönchengladbach (DE)
(72) Erfinder: Hubert, Anton H., 41065 Mönchengladbach (DE)
(74) Vertreter: Paul, Dieter-Alfred, Dipl.-Ing.

(57) **Zusammenfassung**

Die Erfindung betrifft eine Brennschneidvorrichtung (1) mit einem in einer ersten Richtung über einen ersten Antrieb verfahrbaren Brennerwagenträger und mit wenigstens einem auf dem Brennerwagenträger (6) in einer zweiten Richtung über einen zweiten Antrieb verfahrbaren Brennerwagen (10), an dem ein Brennerkopf (12) über eine Brennerhalterung angeordnet ist, die einen Brennerhalter (30) aufweist, welche um eine erste Achse verschwenkbar an einem Zwischenträger (27) gelagert ist, der um eine zweite Achse verschwenkbar am Brennerwagen (10) gelagert ist, wobei die Achsen derart zum Schneidtisch (2) verlaufen, daß der Brennerkopf (12) aus einer zum Schneidtisch (2) senkrechten Stellung in eine Schrägstellung und umgekehrt bewegbar ist. Die Brennschneidvorrichtung ist dadurch gekennzeichnet, daß für die Verschwenkung von Brennerhalter (30) und Zwischenträger (27) Stellmotoren (28, 34) vorgesehen sind, die mit einer elektrischen oder elektronischen Steuereinrichtung für die Aktivierung der Stellmotoren (28, 34) verbunden sind.

## Beschreibung

Die Erfindung betrifft eine Brennschneidvorrichtung mit einem in einer ersten Richtung über einen ersten Antrieb parallel zu einem Schneidtisch verfahrenbaren Brennerwagenträger und mit wenigstens einem auf dem Brennerwagenträger in einer zweiten Richtung über einen zweiten Antrieb parallel zu dem Schneidtisch verfahrbaren Brennerwagen, an dem ein Brennerkopf zur Erzeugung eines Brennschneidstrahls über eine Brennerhalterung angeordnet ist, die einen Brennerhalter aufweist, welcher um eine erste Achse verschwenkbar an einem Zwischenträger gelagert ist, der um eine zweite Achse verschwenkbar am Brennerwagen gelagert ist, wobei die Achsen derart zum Schneidtisch verlaufen, daß der Brennerkopf bei Verschwenkung um die Achsen aus einer zum Schneidtisch senkrechten Stellung in eine Schrägstellung und umgekehrt bringbar ist.

Brennschneidvorrichtungen dienen dazu, Metallplatten mittels eines Brennschneidstrahls zu schneiden. Der Brennschneidstrahl wird in einem Brennerkopf erzeugt, der als Schneidbrenner, Plasmabrenner, Laserbrenner oder dergleichen ausgebildet sein kann.

Ein Brennschneidvorrichtung hat einen Schneidtisch, auf dem das jeweils zu schneidende Werkstück, in der Regel eine ebene Platte, auflegbar und gegebenenfalls fixierbar ist. Gewöhnlich erstreckt sich der Schneidtisch in einer horizontalen Ebene. Oberhalb des Schneidtischs befindet sich ein Brennerwagenträger, in dem ein oder mehrere Brennerwagen angebracht sind (vgl. DE 295 20 483.4), wobei jeder Brennerwagen einen Brennerkopf aufweist. Der Brennerwagen bzw. die Brennerwagen sind in Richtung der Längsachse des Brennerwagenträgers mit Hilfe eines elektrischen Antriebs auf Schienen parallel zur Ebene des Schneidtischs verfahrbar.

Der Brennerwagenträger ist in der Regel brückenartig ausgebildet und stützt sich beidseits des Schneidtischs über Fahrwerke auf dort vorhandenen Schienen ab, die sich quer zur Längsachse des Brennerwagenträgers erstrecken, so daß der Brennerwagenträger zusammen mit dem Brennerwagen bzw. den Brennerwagen in dieser Richtung über den Schneidtisch verfahren werden kann. Zusammen mit der Verfahrbarkeit des Brennerwagen selbst kann deshalb jeder Punkt des Schneidtischs für das Schneiden des Werkstücks angesteuert werden. Dies geschieht mit Hilfe einer Steuereinrichtung, die ein Ablaufprogramm aufweist, das die beiden Antriebe entsprechend dem gewünschten Schneidverlauf automatisch steuert. Das Ablaufprogramm kann auch durch Eingabe entsprechender Daten verändert werden, um verschiedene Schneidverläufe verwirklichen zu können.

Eine beidseitige Abstützung des Brennerwagenträgers ist nicht unbedingt nötig. Bei kleineren Brennschneidvorrichtungen kann der Träger auch frei auskragend ausgebildet sein, wobei er in diesem Fall nur an einer Seite des Schneidtischs auf entsprechend ausgebildeten Führungseinrichtungen verfahrbar geführt ist (vgl. DE 297 22 240.6). Diese Ausbildung empfiehlt sich wegen des geringeren Raumaufwandes besonders bei kleineren Brennschneidvorrichtungen.

Der Brennerkopf wird an dem Brennerwagen über eine Brennerhalterung in Position gehalten. Die Brennerhalterung ist vertikal zum Schneidtisch verfahrbar, um den Abstand des Brennerkopfes zum Werkstück richtig einstellen zu können. Dabei wird der Brennerkopf gewöhnlich so fixiert, daß ein zum Schneidtisch senkrechter Brennschneidstrahl erzeugt wird.

In manchen Fällen besteht jedoch der Bedarf, schon beim Schneidvorgang eine schräge Fase an den Kanten des auszuschneidenden Werkstücks zu erzeugen. Hierzu muß der Brennerkopf schräg gestellt werden, um einen entsprechend schräg auf das Werkstück auftreffenden Brennschneidstrahl zu erzeugen. Im Stand der Technik ist hierzu eine Brennerhalterung verwendet worden, bei der der Brennerkopf an einem Brennerhalter befestigt ist, der an einem Zwischenträger um eine erste Achse verschwenkbar gelagert ist, wobei der Zwischenträger um eine zweite Achse verschwenkbar am Brennerwagen gelagert ist (vgl. DE 295 20 482.6).

Die beiden Achsen stehen senkrecht zueinander und verlaufen in einer zum Schneidtisch parallelen Ebene. Mit Hilfe einer solchen Brennerhalterung kann jede Schrägstellung des Brennerkopfes verwirklicht werden.

Nachteilig bei dieser Brennerhalterung ist es, daß die Schrägstellung des Brennerkopfes von Hand eingestellt und daß bei einer Änderung der Schrägstellung der Schneidvorgang unterbrochen werden muß. Hierdurch entsteht ein erheblicher Zeitaufwand. Zusätzlich besteht die Gefahr der Verletzung der Bedienungsperson durch Berührung heißer Teile am Brennerkopf und am Werkstück.

Der Erfindung liegt die Aufgabe zugrunde, eine Brennschneidvorrichtung der eingangs genannten Art so auszubilden, daß die Verstellung des Brennerkopfes wesentlich schneller und ohne Gefährdung der Bedienungsperson vorgenommen werden kann.

Diese Aufgabe wird erfindungsgemäß dadurch gelöst, daß für die Verschwenkung von Brennerhalter und Zwischenhalter Stellmotoren vorgesehen sind, die mit einer elektrischen oder elektronischen Steuereinrichtung für die Aktivierung der Stellmotoren verbunden sind. Grundgedanke der Erfindung ist es also, die Verstellung des Brennerkopfes mittels Stellmotoren vorzunehmen, die über eine Steuereinrichtung aktiviert werden. Die Bedienungsperson kann also die Einstellung und Veränderung der Schrägstellung des Brennerkopfes von der Steuereinrichtung her besorgen, so daß nicht mehr die Gefahr des Kontaktes mit heißen Brennerteilen oder Werkstückteilen besteht und der Schneidvorgang nicht oder nur unwesentlich unterbrochen werden muß.

Dabei ist es von besonderem Vorteil, wenn die Steuereinrichtung ein Ablaufprogramm aufweist, über das die Stellmotoren in Abhängigkeit vom Fortgang des Schneidvorgangs aktiviert werden. Dieses Ablaufprogramm kann, wenn immer nur dieselben Teile ausgeschnitten werden müssen, fest installiert sein. Die Brennschneidvorrichtung kann jedoch flexibler eingesetzt werden, wenn über eine Eingabeschnittstelle Daten für das Ablaufprogramm eingebbar sind, über die die Stellung des Brennerkopfes in Abhängigkeit vom Fortgang des Schneidvorgangs vorzugsweise schon zu Beginn des Schneidvorgangs einstellbar ist. Dabei sollte die Steuereinrichtung Teil einer Gesamtsteuereinrichtung sein, über die die Antriebe für den Brennerwagenträger und den Brennerwagen aktivierbar sind, wobei Steuereinrichtung und Gesamtsteuereinrichtung ein gemeinsames Ablaufprogramm aufweisen. Durch Vorabeingabe der notwendigen Daten über den Schneidverlauf und die jeweilige Stellung des Brennerkopfes in Abhängigkeit davon kann der gesamte Schneidvorgang automatisiert werden, so daß die Bedienungsperson während des Schneidvorgangs nicht mehr anwesend sein muß.

Für die Stellmotoren kommen alle geeigneten Motoren in Frage. In erster Linie können dies elektrische Schrittmotoren sein. Aber auch pneumatische Stellmotoren, beispielsweise in Form von Kolben-Zylinder-Einheiten, sind möglich.

Sofern elektrische Stellmotoren Anwendung finden, können am Brennerhalter und am Brennerwagen bogenförmige Zahnkränze vorgesehen sein, in die die Stellmotoren einfassen. In diesem Fall ist es zweckmäßig, daß der Brennerkopf an dem Zwischenträger und auch der Zwischenträger selbst auf Bogenführungen gelagert sind, wobei der Zwischenträger zweckmäßigerweise an seinen beiden Enden auf Bogenführungen gelagert ist. Mit Hilfe solcher Bogenführungen kann die Achse an die gewünschte Stelle gelegt werden.

Was die Anordnung der ersten und zweiten Achse angeht, ist es in an sich bekannter Weise vorteilhaft, wenn die zweite Achse senkrecht zur Ebene steht, in der die erste Achse verschwenkbar ist. Dabei sollte sich die Ebene, in der die erste Achse verschwenkbar ist, senkrecht zum Schneidtisch erstrecken. Besonders vorteilhaft ist es, wenn die zweite Achse unterhalb des unteren Endes des Brennerkopfes verläuft, und zwar zweckmäßigerweise in einem Abstand, der dem vorgesehenen Abstand zwischen unterem Ende des Brennerkopfes und dem Werkstück entspricht. Entsprechendes sollte für die erste Achse gelten. Eine solche Ausbildung hat den Vorteil, daß es bei der Veränderung der Stellung des Brennerkopfes nicht zu einer Abstandsänderung in bezug auf das Werkstück kommt.

Der Brennerkopf ist gewöhnlich mit einem Zuführstrang für die Zuführung des Energieträgers, bei einem Plasmabrenner verschiedener Gase, verbunden. Dieser wirkt mit seinem Gewicht auf die Führung des Brennerkopfes und die Stellmotoren ein. Um letztere zu entlasten, ist nach der Erfindung vorgesehen, daß der Zuführstrang eine Gewichtsentlastung aufweist, die beispielsweise aus einem Gegengewicht oder einer Federaufhängung bestehen kann. Eine entsprechende Gewichtsentlastung ist zweckmäßigerweise auch für den Zwischenträger vorgesehen, damit auch dessen Führung und Stellmotor entlastet wird.

In der Zeichnung ist die Erfindung anhand eines schematisch dargestellten Ausführungsbeispieles näher veranschaulicht. Es zeigen:
- Fig. 1: die Frontansicht einer Brennschneidvorrichtung und
- Fig. 2: eine perspektivische Ansicht des Brennerwagens der Brennschneidvorrichtung gemäß Fig. 1.

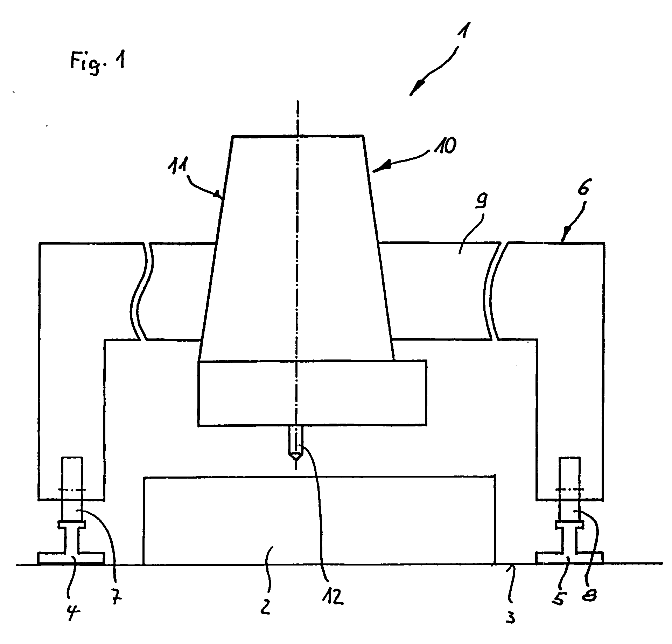

Die in Figur 1 dargestellte Brennschneidvorrichtung 1 weist einen lediglich umrißhaft dargestellten Schneidtisch 2 auf, der ortsfest auf einem Boden 3 aufliegt und auf dessen oberseitigen Oberfläche ein Werkstück aufgelegt und notfalls fixiert werden können. Zu beiden Seiten des Schneidtischs 2 verlaufen Schienen 4, 5, die auf dem Boden 3 aufliegen. Auf den Schienen 4, 5 ruht ein portalförmiger Brennerwagenträger 6, der zu beiden Seiten ein Fahrgestell 7, 8 hat. Über die Fahrgestelle 7, 8 ist der Brennerwagenträger 6 längs der Schienen 4, 5, d. h. senkrecht zur Zeichnungsebene, verfahrbar, wobei das Verfahren mit Hilfe eines elektromotorischen Antriebs erfolgt.

Der Brennerwagenträger 6 hat einen sich parallel zur Oberfläche des Schneidtischs 2 erstreckenden Querträger 9, auf dem ein Brennerwagen 10 über hier nicht näher dargestellte Schienen gelagert ist. Die Schienen erstrecken sich längs des Querträgers 9 und damit in der Zeichnungsebene. Der Brennerwagen 10 ist folglich in der Längsachse des Querträgers 9, d. h. in Querrichtung verfahrbar geführt, wobei ein zweiter elektromotorischer Antrieb für die Bewegung des Brennerwagens 10 vorgesehen ist. Die Bewegungsrichtung des Brennerwagens 10 und die des Brennerwagenträgers 6 stehen also senkrecht zueinander und verlaufen in einer Horizontalebene.

Der Brennerwagen 10 weist ein Brennerwagengehäuse 11 auf, aus dem untenseitig ein Plasmabrennerkopf 12 herausragt. Brennerwagengehäuse 11 und Plasmabrennerkopf 12 sind - was hier nicht näher dargestellt ist - vertikal verfahrbar, so daß der Abstand des Plasmabrennerkopfes 12 vom Schneidtisch 2 in Anpassung an die jeweilige Dicke des auf dem Schneidtisch 2 befindlichen Werkstückes eingestellt werden kann.

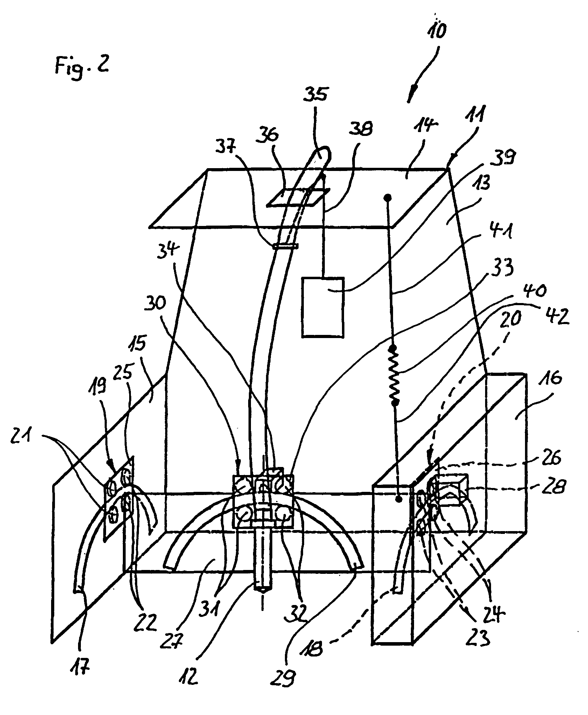

In Fig. 2 ist das Brennerwagengehäuse 11 teilweise geöffnet dargestellt. Zu sehen sind eine Gehäuserückwand 13, eine Gehäuseoberwand 14, eine linke Gehäuseseitenwand 15 und rechtsseitig ein quaderförmiger Gehäusekasten 16.

An der Innenseite der linken Gehäuseseitenwand 15 und in dem rechten Gehäusekasten 16 ist jeweils eine Kreisbogenführung 17, 18 angebracht. Die Kreisbogenführungen 17, 18 haben Radiusmittelpunkte, deren Verbindung eine Horizontalachse bilden, die sich parallel zu dem Querträger 9 unterhalb des unteren Endes des Plasmabrennerkopfs 12 erstreckt. Auf den Kreisbogenführungen 17, 18 laufen Fahrwerke 19, 20, die jeweils zwei die Kreisbogenführungen 17, 18 einfassende Rollenpaare 21, 22, 23, 24 aufweisen, die an Fahrwerkträgern 25, 26 gelagert sind. Die Fahrwerkträger 25, 26 sind über einen plattenförmigen Zwischenträger 27 verbunden. Der Zwischenträger 27 ist also über die Fahrwerke 19, 20 auf den Kreisbogenführungen 17, 18 um die oben erwähnte Horizontalachse verschwenkbar geführt.

An der in dem Gehäusekasten 16 angeordneten Kreisbogenführung 18 ist - was hier nicht näher dargestellt ist - ein Zahnkranz angebracht, der den gleichen Radius hat wie die Kreisbogenführung 18. An dem rechten Fahrwerkträger 26 ist ein Schrittmotor 28 angeordnet, dessen Antriebswelle in einem Zahnrad endet, das mit dem Zahnkranz kämmt. Bei Aktivierung des Schrittmotors 28 wird also der Zwischenträger 27 mit den Fahrwerken 19, 20 entlang der Kreisbogenführungen 17, 18 bewegt und führt dabei eine Schwenkbewegung um die von den Kreisbogenführungen 17, 18 definierte Horizontalachse aus.

An dem Zwischenträger 27 ist eine weitere Kreisbogenführung 29 angebracht, deren Radius so bemessen ist, daß der Mittelpunkt unterhalb des unteren Endes des Plasmabrennerkopfes 12 sitzt, und zwar vorzugsweise in einem Abstand, der dem vorgesehenen Abstand zu einem auf dem Schneidtisch 2 befindlichen Werkstück entspricht. Auf der Kreisbogenführung 29 ist ein Fahrwerk 30 geführt, das - wie die Fahrwerke 19, 20 - zwei Rollenpaare 31, 32 aufweist, die jeweils die Kreisbogenführung 29 beidseitig einfassen. Die Rollenpaare 31, 32 sind an einem Fahrwerkträger 33 gelagert, an dem der Plasmabrennerkopf 12 befestigt ist.

Die Kreisbogenführung 29 ist - wie die Kreisbogenführung 18 - mit einem im Verlauf deckungsgleichen Zahnkranz versehen, der hier nicht näher dargestellt ist. An dem Fahrwerkträger 33 ist ein Schrittmotor 34 angebracht, dessen Abtriebsritzel mit dem Zahnkranz kämmt. Durch Aktivierung des Schrittmotors 34 kann also das Fahrwerk 30 entlang der Kreisbogenführung 29 verfahren werden, mit der Folge, daß der Plasmabrennerkopf 12 in der Ebene der Kreisbogenführung 29 verschwenkt wird.

Das obere Ende des Plasmabrennerkopfs 12 ist mit einem Zuführstrang 35verbunden, in dem Zuführleitungen für den Betrieb des Plasmabrennerkopfs 12 zusammengefaßt sind. Der Zuführstrang 35 tritt über eine Öffnung 36 in der Gehäuseoberwand 14 aus und wird dann in an sich bekannter Weise fortgesetzt. Etwas unterhalb der Gehäuseoberwand 14 ist an dem Zuführstrang 35 ein Haltering 37 befestigt, der über einen zunächst nach oben gehenden und dann nach unten umgelenkten Draht 38 mit einem Gegengewicht 39 verbunden ist. Das Gegengewicht 39 entlastet das Fahrwerk 30 von dem nicht unerheblichen Gewicht des Zuführstranges 35, so daß der Schrittmotor 34 insbesondere bei einer Bewegung des Fahrwerkes 30 aus einer Position an einem Ende der Kreisbogenführung 29 nicht überlastet wird.

Für den Zwischenträger 27 ist ebenfalls eine Gewichtsentlastung vorgesehen. Sie besteht in diesem Fall aus einer Schraubenfeder 40, die über Drahtabschnitte 41, 42 mit dem Zwischenträger 27 einerseits und der Gehäuseoberwand 14 andererseits verbunden ist. Die Schraubenfeder 40 wird gedehnt, wenn die beiden Fahrwerke 19, 20 in Richtung der Enden der Kreisbogenführungen 17, 18 bewegt werden, so daß es dem Schrittmotor 28 leichter fällt, aus diesen Positionen wieder in die Mittelstellung zurückzugehen.

Die Steuerung der Antriebe für das Verfahren des Brennerwagenträgers 6 und des Brennerwagens 10 und die Steuerung der Schrittmotoren 28, 34 geschieht durch eine hier nicht näher dargestellte Steuereinrichtung. In dieser Steuereinrichtung ist ein Ablaufprogramm installiert, das durch Eingabe entsprechender Daten über eine Eingabetastatur so programmiert werden kann, daß der Schneidvorgang zum Ausschneiden eines bestimmten Werkstückes aus einer auf dem Schneidtisch 2 liegenden Platte vollautomatisch abläuft. Dabei werden vor dem Schneidvorgang Daten eingegeben, die den Verlauf der Schneidkante bestimmen und damit die Aktivierung der Antriebe für den Brennerwagenträger 6 und den Brennerwagen 10 bestimmen. Ferner werden Daten eingegeben, die den Fasenwinkel an der Schneidkante über den Schneidverlauf bestimmen und damit die Aktivierung der Schrittmotoren 28, 34 bewirken.

Am einfachsten ist die Situation bei einem senkrechten Schnitt. In diesem Fall bleibt der Plasmabrennerkopf 12 in einer senkrechten Position, d. h. die Fahrwerke 19, 20, 30 werden durch entsprechende Ansteuerung der Schrittmotoren 28, 34 in die Mitte der Kreisbogenführungen 17, 18, 29 gefahren, wie dies in Fig. 2 dargestellt ist. Soll eine schräge Schneidfase verwirklicht werden, werden die beiden Schrittmotoren 28, 34 so aktiviert, daß der Plasmabrennerkopf 12 den vorgesehenen Winkel auch bei Änderung der Richtung der Schneidkante beibehält, bis das Werkstück ausgeschnitten ist. Die Ablaufprogrammierung kann auch so beeinflußt werden, daß über den Umfang des auszuschneidenden Werkstücks unterschiedliche Schneidfasen verwirklicht werden.

## Patentansprüche

1. Brennschneidvorrichtung (1) mit einem in einer ersten Richtung über einen ersten Antrieb parallel zu einem Schneidtisch (2) verfahrbaren Brennerwagenträger und mit wenigstens einem auf dem Brennerwagenträger (6) in einer zweiten Richtung über einen zweiten Antrieb parallel zu dem Schneidtisch (2) verfahrbaren Brennerwagen (10), an dem ein Brennerkopf (12) zur Erzeugung eines Brennschneidstrahls über eine Brennerhalterung angeordnet ist, die einen Brennerhalter (30) aufweist, welche um eine erste Achse verschwenkbar an einem Zwischenträger (27) gelagert ist, der um eine zweite Achse verschwenkbar am Brennerwagen (10) gelagert ist, wobei die Achsen derart zum Schneidtisch (2) verlaufen, daß der Brennerkopf (12) bei Verschwenkung um die Achsen aus einer zum Schneidtisch (2) senkrechten Stellung in eine Schrägstellung und umgekehrt bewegbar ist, **dadurch gekennzeichnet, daß** für die Verschwenkung von Brennerhalter (30) und Zwischenträger (27) Stellmotoren (28, 34) vorgesehen sind, die mit einer elektrischen oder elektronischen Steuereinrichtung für die Aktivierung der Stellmotoren (28, 34) verbunden sind.

2. Brennschneidvorrichtung nach Anspruch 1, **dadurch gekennzeichnet, daß** die Steuereinrichtung ein Ablaufprogramm aufweist, über das die Stellmotoren (28, 34) in Abhängigkeit vom Fortgang des Schneidvorgangs aktiviert werden.

3. Brennschneidvorrichtung nach Anspruch 2, **dadurch gekennzeichnet, daß** über ein Eingabeschnittstelle Daten für das Ablaufprogramm eingebbar sind, über die die Stellung des Brennerkopfs (12) in Abhängigkeit vom Fortgang des Schneidvorgangs einstellbar ist.

4. Brennschneidvorrichtung nach Anspruch 2 oder 3, **dadurch gekennzeichnet, daß** die Steuereinrichtung Teil einer Gesamtsteuereinrichtung ist, über die die Antriebe aktivierbar sind, und Steuereinrichtung und Gesamtsteuereinrichtung ein gemeinsames Ablaufprogramm aufweisen.

5. Brennschneidvorrichtung nach einem der Ansprüche 1 bis 4, **dadurch gekennzeichnet, daß** die Stellmotoren (28, 34) pneumatisch oder elektrisch ausgebildet sind.

6. Brennschneidvorrichtung nach Anspruch 5, **dadurch gekennzeichnet, daß** die Stellmotoren als Schrittmotoren (28, 34) ausgebildet sind.

7. Brennschneidvorrichtung nach einem der Ansprüche 1 bis 6, **dadurch gekennzeichnet, daß** am Brennerhalter (30) und am Brennerwagen (10) bogenförmige Zahnkränze vorgesehen sind, in die die Stellmotoren (28, 34) einfassen.

8. Brennschneidvorrichtung nach einem der Ansprüche 1 bis 7, **dadurch gekennzeichnet, daß** der Brennerkopf (12) an dem Zwischenträger (27) auf einer Bogenführung (29) gelagert ist.

9. Brennschneidvorrichtung nach einem der Ansprüche 1 bis 8, **dadurch gekennzeichnet, daß** der Zwischenträger (27) auf wenigstens einer Bogenführung (17, 18) gelagert ist.

10. Brennschneidvorrichtung nach Anspruch 9, **dadurch gekennzeichnet, daß** der Zwischenträger (27) an seinen beiden Enden auf Bogenführungen (17, 18) gelagert ist.

11. Brennschneidvorrichtung nach einem der Ansprüche 1 bis 10, **dadurch gekennzeichnet, daß** die zweite Achse senkrecht zur Ebene steht, in der die erste Achse verschwenkbar ist.

12. Brennschneidvorrichtung nach einem der Ansprüche 1 bis 11, **dadurch gekennzeichnet, daß** sich die Ebene, in der die erste Achse verschwenkbar ist, senkrecht zum Schneidtisch (2) erstreckt.

13. Brennschneidvorrichtung nach einem der Ansprüche 1 bis 12, **dadurch gekennzeichnet, daß** die zweite Achse unterhalb des unteren Endes des Brennkopfs (12) verläuft.

14. Brennschneidvorrichtung nach einem der Ansprüche 1 bis 13, **dadurch gekennzeichnet, daß** die erste Achse unterhalb des unteren Endes des Brennerkopfes (12) verläuft.

15. Brennschneidvorrichtung nach einem der Ansprüche 1 bis 14, **dadurch gekennzeichnet, daß** der Brennerkopf (12) mit einem Zuführstrang (35) verbunden ist und daß der Zuführstrang (35) eine Gewichtsentlastung (39) aufweist.

16. Brennschneidvorrichtung nach einem der Ansprüche 1 bis 15, **dadurch gekennzeichnet, daß** der Zwischenträger (27) eine Gewichtsentlastung (40) aufweist.

17. Brennschneidvorrichtung nach Anspruch 15 oder 16, **dadurch gekennzeichnet, daß** die Gewichtsentlastung aus einem Gegengewicht (39) und/oder einer Federaufhängung (40) besteht.
